# EUROPEAN PATENT APPLICATION

(11) **EP 4 549 069 A1**
(43) Date of publication of application: **07.05.2025**
(21) Application number: 23831332.4
(22) Date of filing: 26.06.2023
(51) Int. Cl.: B23G 7/02, B23G 5/06

(54) **THREAD FORMING TAP**

(30) Priority: 28.06.2022 JP 2022103192
(71) Applicant: OSG Corporation, Aichi 442-0005 (JP)
(72) Inventor: ANDO, Haruyasu, Toyokawa-shi, Aichi 441-1231 (JP)
(74) Representative: Epping - Hermann - Fischer
(86) International application number: PCT/JP2023/023449
(87) International publication number: WO 2024/004890

(57) **Abstract**

A thread forming tap (1) is provided with a male thread portion (3), a groove, and an inside diameter finishing blade (61). A chamfer portion (31) of the male thread portion (3) is provided continuous with the complete thread portion (32) and decreases in diameter toward a tip end. The groove is provided parallel to a shaft center spanning the complete thread portion (32) and the chamfer portion (31) so as to divide a thread (71) of the male thread portion (3). On the chamfer portion (31) and the complete thread portion (32), the inside diameter finishing blade (61) is provided along an open edge of the groove on the side opposite the rotational direction of the thread forming tap (1). The inside diameter finishing blade (61) cuts and removes a crest portion of the female thread formed on a surface layer of a pilot hole (90). The height of a first step finishing blade (611) of the inside diameter finishing blade (61) on the chamfer portion (31) is lower than the height of a second step finishing blade (612) of the inside diameter finishing blade (61) formed on a portion corresponding to a thread (71) on the tip-most end of the complete thread portion (32).

## Description

### Technical Field

The present invention relates to a thread forming tap.

### Background art

Patent Literature 1 discloses a thread forming tap with an inside diameter finishing blade (hereinafter referred to as "thread forming tap"). A male thread portion of the thread forming tap is provided with a complete thread portion and a chamfer portion. The chamfer portion is provided continuous with the complete thread portion. The chamfer portion becomes smaller in diameter farther toward the tip end. Protrusions and reliefs are provided alternately on a portion from the chamfer portion to a first complete thread. The first complete thread is a thread on the leading-most end of the complete thread portion. The protrusions bite into the inner circumferential surface of a pilot hole and plastically deform it to form a female thread. The thread forming tap is provided with at least one groove. The groove cuts off the threads of the male thread portion in the axial direction. The groove is parallel to the shaft center from the complete thread portion to the chamfer portion. The complete thread portion is provided with the inside diameter finishing blade. The inside diameter finishing blade causes the inner wall surface of the groove to serve as a rake face. The inside diameter finishing blade cuts and removes a crest portion of the female threads.

### Citation List

### Patent Literature

Patent Literature 1: Japanese Patent No. 5362854

### Summary of Invention

When a thread forming tap is reversed and returned after female thread rolling is complete, a rubbing phenomenon occurs. This rubbing phenomenon is a phenomenon in which the inside diameter finishing blade contacts the inside diameter of the female thread in such a way that it rubs against the inside diameter of the female thread from the opposite direction to the rake face. The inside diameter finishing blade could crush or tear the shape of the crests of the machined threads.

The rubbing phenomenon could contribute to abrasive wear on the relief surface of the inside diameter finishing blade. In the rolling of soft materials, the rubbing phenomenon could also cause workpiece adhesion. The inside diameter finishing blade may be formed with a slight back taper so that the diameter is approximately the same from the chamfer portion at the tip of the thread forming tap. In this case, the inside diameter finishing blade that actually performs the finishing cut of the inside diameter portion of the female thread is the inside diameter finishing blade near the first complete thread portion after the plastic deformation processing of the thread forming tap is completed. The inside diameter finishing thread of the chamfer portion may cut the inside diameter portion during the process of building up the female threads. However, the inside diameter finishing blade of the chamfer portion is not an inside diameter finishing blade that finishes the final inside diameter dimension. The diameter of the inside diameter finishing blade of the chamfer portion is larger than the diameter of the complete thread portion by the amount of the back taper. Therefore, when the thread forming tap is reversed and returned, there is a possibility that the inside diameter finishing blade of the chamfer portion will cause the rubbing phenomenon in the reversed state.

An object of the present invention is to provide a thread forming tap capable of reducing deformation of the crest of a female thread formed by rolling.

### Problems that invention is to solve

A thread forming tap according to a first aspect of the present invention includes: in the thread forming tap that forms a female thread by plastically deforming a pilot hole in a workpiece, a male thread portion having a complete thread portion and a chamfer portion provided continuous with the complete thread portion and which becomes smaller in diameter toward a tip end, a groove provided parallel to a shaft center and spanning the complete thread portion and the chamfer portion so as to cut off threads of the male thread portion, and, in the chamfer portion and the complete thread portion, an inside diameter finishing blade that is provided along an open edge of the groove on the side opposite the rotational direction of the thread forming tap, and that cuts and removes a crest portion of the female thread, wherein, with the inside diameter finishing blade, when a distance from the axis of the thread forming tap is the height of the inside diameter finishing blade, the height on the chamfer portion side of the inside diameter finishing blade is lower than the height of a portion corresponding to the thread on the tip-most end of the complete thread portion. Therefore, the thread forming tap is able to reduce deformation of the thread due to the inside diameter finishing blade on the chamfer portion interfering with the female threads that have been formed, when the thread forming tap is pulled out of the workpiece when the thread forming tap is reversed.

A step that becomes lower in height on the chamfer portion side than the height on the complete thread portion side may be formed on the inside diameter finishing blade between the chamfer portion and the thread at the tip-most end of the complete thread portion. Therefore, the height on the chamfer portion of the inside diameter finishing blade of the thread forming tap can easily be made lower than the height of a portion corresponding to thread on the leading-most end of the complete thread portion.

An inclined portion where the height decreases from the tip-most end thread of the complete thread portion toward the tip end side of the chamfer portion may be formed on the inside diameter finishing blade. Therefore, the height of the portion on the chamfer portion side of the inside diameter finishing blade of the thread forming tap can easily be made lower than the height of a portion corresponding to the thread on the leading-most end of the complete thread portion.

The inside diameter finishing blade may be provided with at least a back taper where the height decreases from the portion corresponding to the thread on the leading-most end of the complete thread portion toward the rear end side. Therefore, the thread forming tap makes it possible to reduce friction with the workpiece during forward and reverse rotation, so heat generation caused by the inside diameter finishing blade contacting the workpiece can be reduced.

### Brief description of the drawings

Fig. 1 is a perspective view of a thread forming tap 1.
Fig. 2 is a front view of the thread forming tap 1.
Fig. 3 is a back view of the thread forming tap 1.
Fig. 4 is a plan view of the thread forming tap 1.
Fig. 5 is a cross-sectional perspective view of the thread forming tap 1 cut on a tip end side thereof.
Fig. 6 is view of the thread forming tap 1 shown in Fig. 5 as seen from the tip end side.
Fig. 7 is a cross-sectional view as seen in the direction of arrows I-I shown in Fig. 1.
Fig. 8 is a view showing a state before a pilot hole 90 is rolled with the thread forming tap 1.
Fig. 9 is a view showing a state in which the thread forming tap 1 has been inserted into the pilot hole 90.
Fig. 10 is a view showing a state in which the thread forming tap 1 has been pulled out from the female thread.
Fig. 11 is a view showing an inside diameter finishing blade 65 formed on a male thread portion 3 of a thread forming tap 100 according to a modified example.
Fig. 12 is a photograph showing the shape of a known product and test results in a verification test.
Fig. 13 is a photograph showing the shape of a product of the present invention and test results in a verification test.
Fig. 14 is a view showing the blade shape of a thread forming tap 101 according to a modified example.
Fig. 15 is a view showing the blade shape of a thread forming tap 102 according to a modified example.

### Description of Embodiments

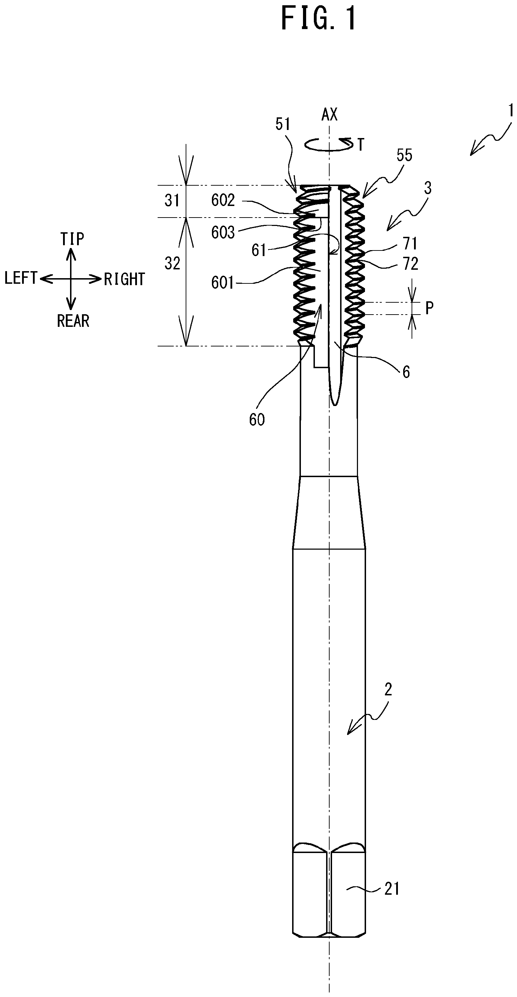

One embodiment of the present invention will be described. Hereinafter in the description, in the axial direction along a shaft center AX of a thread forming tap 1 shown in Fig. 1, the side with a male thread portion 3 will be referred to as the tip end side and the side with a shank 2 will be referred to as the rear end side. In the present embodiment, to simplify the description, the directions of the tip (tip end), rear (rear end), front (front surface), back (back surface), right, and left shown in the drawing will be used regarding the orientation of the thread forming tap 1. In the present embodiment, for descriptive clarity, there are locations in the drawings showing dimensional ratios that are different to actual dimensional ratios as necessary. Therefore, the present invention is not interpreted as being limited to the shape in the drawings.

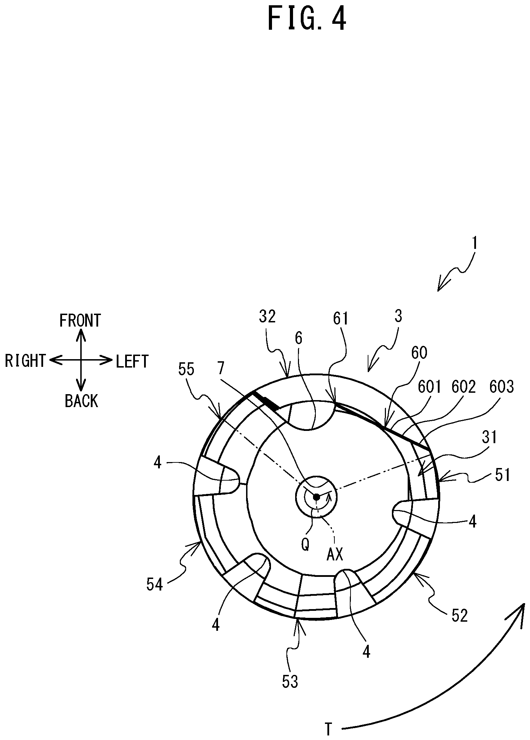

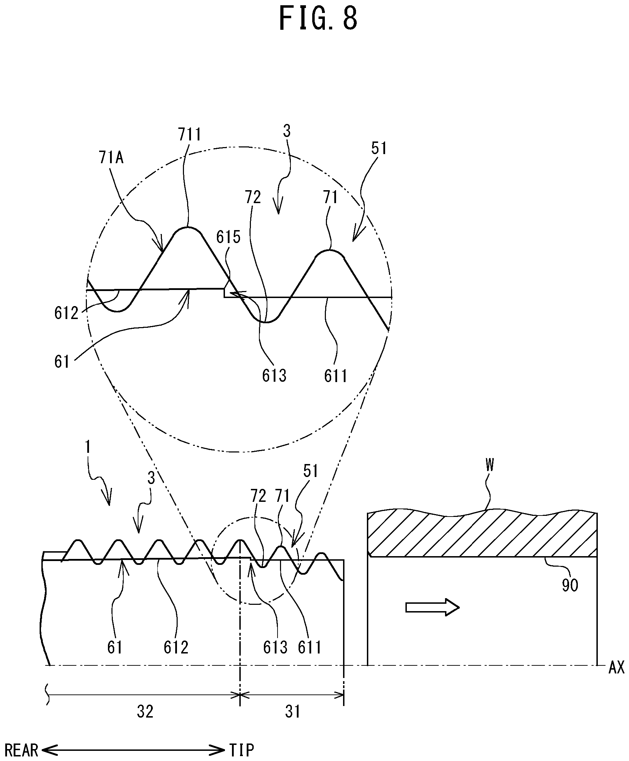

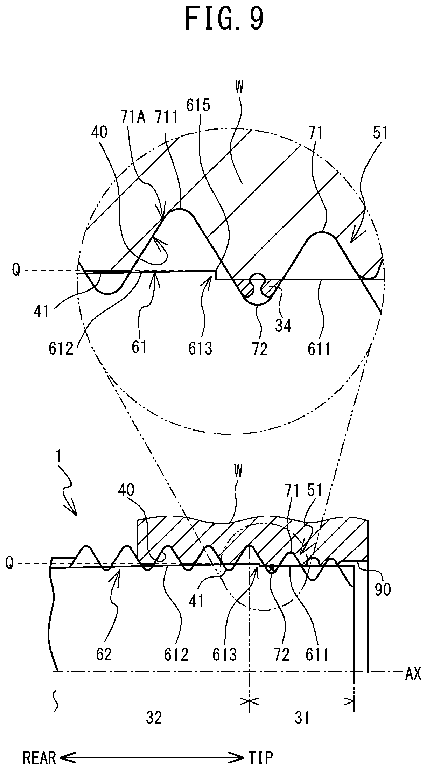

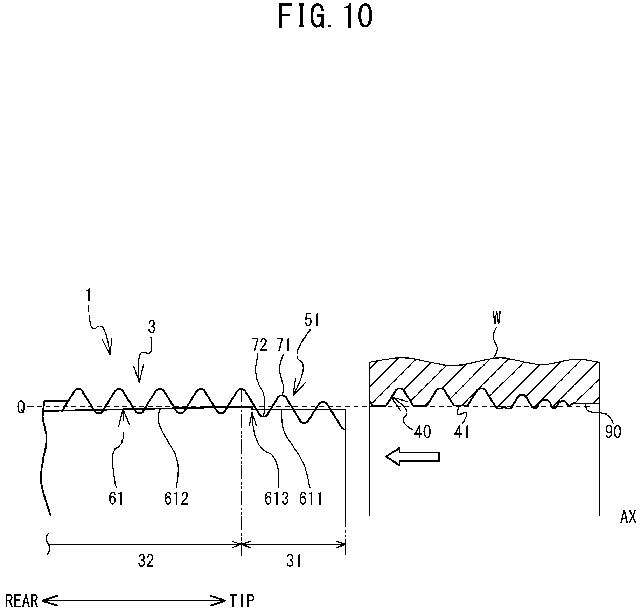

The configuration of the thread forming tap 1 will be described with reference to Fig. 1 to Fig. 7. The thread forming tap 1 shown in Fig. 1 plastic-deforms the surface layer of a pilot hole 90 (refer to Fig. 8) provided in a workpiece W. The thread forming tap 1 forms a female thread 40 (refer to Fig. 9 and Fig. 10) in the pilot hole 90. When viewing the thread forming tap 1 from the tip end side, the thread forming tap 1 rotates in the counterclockwise direction centered on the shaft center AX (refer to the direction of the rotational direction T shown in Fig. 1 and Fig. 4).

As shown in Fig. 1 to Fig. 3, the thread forming tap 1 is provided with the shank 2, the male thread portion 3, four oil grooves 4 (refer to Fig. 4), and one groove 6. The shank 2 has a cylindrical shape with the shaft center AX. The material of the shank 2 is high-speed tool steel, for example. The shank 2 is provided with a square portion 21 on the rear end side. The square portion 21 has a substantially square cross-sectional shape. A tool holder (not shown in the drawings) is attached to the square portion 21. The tool holder supporting the thread forming tap 1 is attached to a main spindle (not shown in the drawings) of a machine tool. Therefore, the thread forming tap 1 rotates as a unit with the tool holder and the main spindle. Hereinafter in the description, the phrase "the thread forming tap 1 is attached to the main spindle" has the same meaning as "the tool holder supporting the thread forming tap 1 is attached to the main spindle."

The male thread portion 3 is provided on the same axis as the shank 2 and is integrally formed with the shank 2. The male thread portion 3 has a substantially cylindrical shape. A thread 71 and a root 72 are provided on the outer circumferential surface of the male thread portion 3. The thread 71 has a substantially uniform height from the root 72. The thread 71 is formed along a helix at a predetermined lead angle.

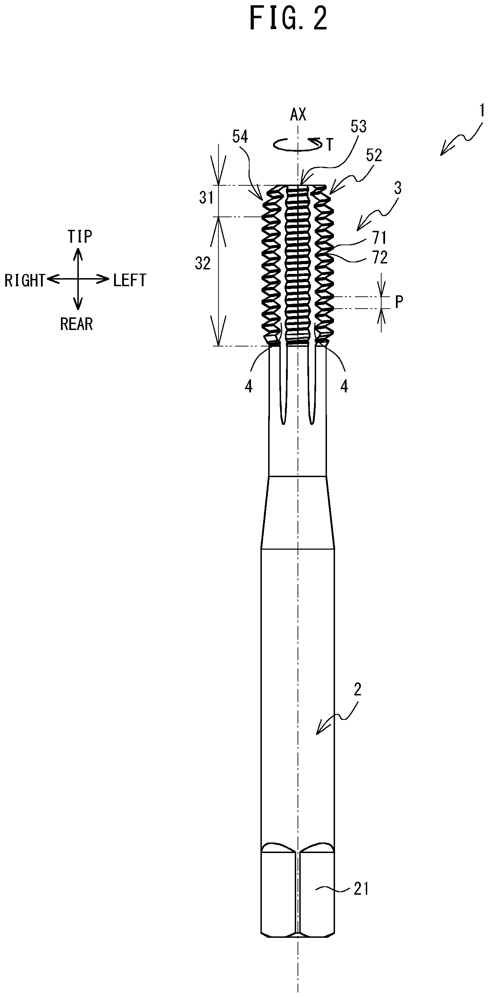

The male thread portion 3 is provided with a chamfer portion 31 and a complete thread portion 32. The chamfer portion 31 is provided in the tip end side of the male thread portion 3. The chamfer portion 31 becomes smaller in diameter farther toward the tip end side on the shaft center AX. Therefore, the height of the thread 71 of the chamfer portion 31 from the shaft center AX is lower than the height of the thread 71 of the complete thread portion 32 from the shaft center AX. The chamfer portion 31 bits into the surface layer of the pilot hole 90 provided in the workpiece W, thereby plastic-deforming the surface layer. The chamfer portion 31 corresponds to the number of pitches from the tip end side of the male thread portion 3. A pitch is the distance between the centers of two threads 71 that are adjacent in the axial direction. The number of pitches is 2 to 5 pitches, for example. The distance between the centers is a distance P shown in Fig. 1 and Fig. 2.

The complete thread portion 32 is provided on the rear end side of the male thread portion 3. The complete thread portion 32 has a substantially constant diameter at the shaft center AX. The shapes of the thread 71 and the root 72 of the complete thread portion 32 substantially match the shapes of the thread and the root of the female thread 40 to be roll formed on the surface layer of the pilot hole 90 (refer to Fig. 10). The complete thread portion 32 finishes the surface of the female thread 40 during the roll-forming process and generates thrust in the screwing direction.

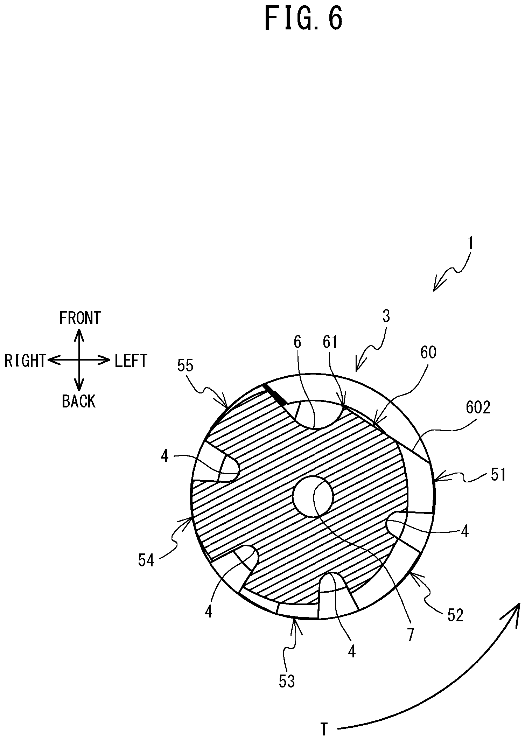

As shown in Fig. 4 and Fig. 6, five protrusions 51 to 55 are formed on a section of the thread 71 of the male thread portion 3. The protrusions 51 to 55 protrude outward in the radial direction and are provided along the helix. As shown in Fig. 4, when the thread forming tap 1 is viewed from the tip end side, the protrusions 51 to 55 are arranged in sequence at equal intervals of 60° in a clockwise direction within a range of approximately 240° (refer to θ in Fig. 4) around the shaft center AX. Therefore, the protrusions 51 to 55 are adjacent to each other for each lead of the helix along a direction parallel to the axial direction. One lead is one rotation.

The four oil grooves 4 are provided one each between the protrusions 51 and 52, between the protrusions 52 and 53, between the protrusions 53 and 54, and between the protrusions 54 and 55. The oil grooves 4 are formed in a straight line parallel to the shaft center AX from the tip end side to the rear end side of the thread forming tap 1 spanning the complete thread portion 32 and the chamfer portion 31 (refer to Fig. 1 to Fig. 3). The cross section of the oil grooves 4 is substantially U-shaped (refer to Fig. 6). The oil grooves 4 supply cutting fluid to the roll-forming surface of the workpiece W. The cutting fluid enhances the lubrication effect and the cooling effect and the like during roll-forming.

In the male thread portion 3, the distance between the protrusions 51 and 55 that are adjacent in the circumferential direction is 120° around the shaft center AX, which is wider than the distance between other protrusions that are adjacent in the circumferential direction (refer to Fig. 4 and Fig. 6). A grinding surface 60 is provided between the protrusions 51 and 55. The grinding surface 60 is a surface where the thread between the protrusions 51 and 55 is removed by plane cutting. The grinding surface 60 extends parallel to the axial direction. The grinding surface 60 is orthogonal to the radial direction of the male thread portion 3. The diameter of the rotation trajectory of the blade tip on the grinding surface 60 matches the inner diameter of the female thread 40 to be roll formed.

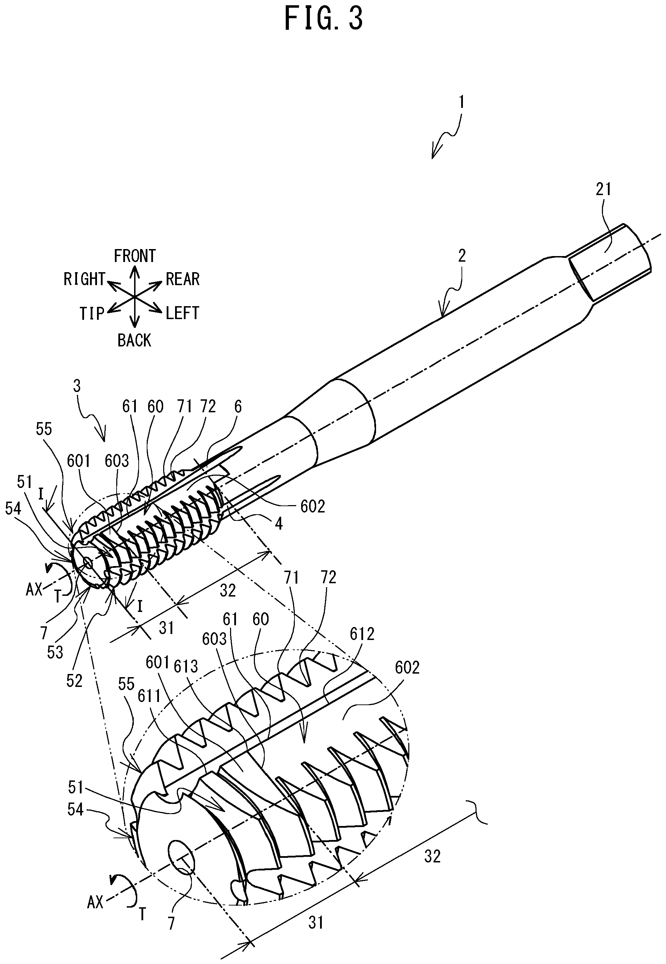

As shown in Fig. 1 and Fig. 3, a step 603 is provided at a position corresponding to the boundary between the chamfer portion 31 and the complete thread portion 32 on the grinding surface 60. A first grinding surface 601 is formed close to the chamfer portion 31 than the step 603. A second grinding surface 602 is formed closer to the complete thread portion 32 than the step 603. The step 603 connects the rear end of the first grinding surface 601 and the tip end of the second grinding surface 602 in the radial direction. The height of the first grinding surface 601 is lower than the height of the second grinding surface 602. The height of the grinding surface 60 is the distance from the shaft center AX. The height of the grinding surface 60 is the diameter of the rotation trajectory. The groove 6 is provided in a position adjacent to the protrusion 55 of the grinding surface 60. The groove 6 is one example of a "groove" of the present invention. The groove 6 is formed in a straight line parallel to the shaft center AX from the tip end side to the rear end side of the male thread portion 3. The groove 6 has a substantially semicircular cross-sectional shape that is larger than that of the other oil grooves 4 (refer to Fig. 6).

An inside diameter finishing blade 61 is formed on a ridge of the groove 6 of the grinding surface 60. The ridge of the groove 6 of the grinding surface 60 is also an open edge of the groove 6 on the side opposite the rotational direction T. Therefore, the inside diameter finishing blade 61 is facing the rotational direction T side. The height of the inside diameter finishing blade 61 is the same as the height of the grinding surface 60. The height of the inside diameter finishing blade 61 is the distance in the radial direction from the shaft center AX. The crest of the thread of the female thread 40 formed by plastic deformation by the protrusions 51 to 55 is an incomplete thread shape. The inside diameter finishing blade 61 finishes an inside diameter portion 41 (refer to Fig. 10) of the female thread 40 by cutting and removing this incomplete thread shape. The inner wall surface of the groove 6 serves as a "rake face" of the inside diameter finishing blade 61. The specific shape of the inside diameter finishing blade 61 will be described later.

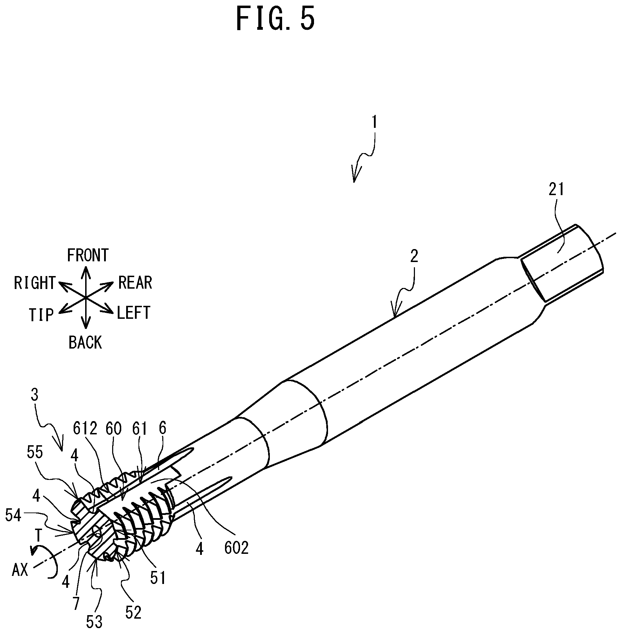

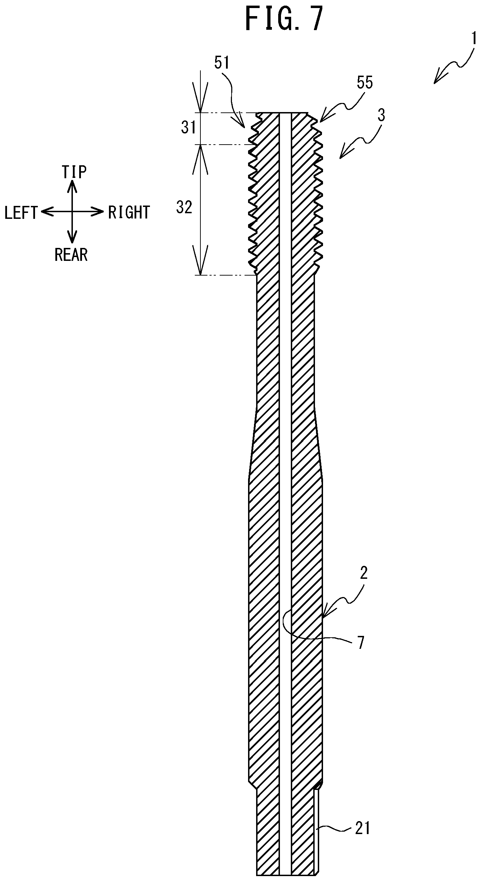

As shown in Fig. 5 to Fig. 7, an oil passage 7 is provided inside the thread forming tap 1. The oil passage 7 extends in a straight line along the shaft center AX, and passes through the center of the rear end portion and the center of the tip end portion of the thread forming tap 1 (refer to Fig. 7). The oil passage 7 opens in a circular shape in the center of the tip end portion of the thread forming tap 1 (refer to Fig. 3). The cutting fluid is supplied from the rear end side of the oil passage 7. The cutting fluid flows through the oil passage 7 toward the tip end side and is discharged from the opening in the tip end portion toward the surface layer of the pilot hole 90.

The shape of the inside diameter finishing blade 61 will be described in detail with reference to Fig. 3, Fig. 8, and Fig. 9. Fig. 8 and Fig. 9 show a portion of a cross-section taken along the shaft center AX of the male thread portion 3. Fig. 8 and Fig. 9 show the height position of the inside diameter finishing blade 61 with respect to a plurality of the threads 71 on the protrusion 55. The inside diameter finishing blade 61 extends erect from the tip end side of the male thread portion 3 toward the base end side in a substantially straight line when viewed from the front (refer to Fig. 1). The inside diameter finishing blade 61 has a slight back taper. A back taper in the present embodiment means an incline in which the height of the inside diameter finishing blade 61 from the shaft center AX decreases from the chamfer portion 31 side toward the complete thread portion 32 side such that the diameter of the inside diameter finishing blade 61 is approximately the same from the chamfer portion 31 side to the way to the complete thread portion 32. Therefore, the thread forming tap 1 can reduce the portion where the inside diameter finishing blade 61 contacts the inside diameter portion 41 of the female thread 40 to be roll formed on the surface layer of the pilot hole 90. In Fig. 9 and Fig. 10, a height position Q shown by the dotted line indicates the height of the inside diameter portion 41 of the female thread 40. The inside diameter finishing blade 61 becomes lower than the height position Q toward the complete thread portion 32 side. Therefore, the thread forming tap 1 can reduce the friction due to contact between the inside diameter finishing blade 61 and the inside diameter portion 41 of the female thread 40 during forward and reverse rotation.

As shown in Fig. 3 and Fig. 8, the inside diameter finishing blade 61 is a two-step cutting blade which corresponds to the stepped shape of the grinding surface 60. The inside diameter finishing blade 61 is provided with a first step finishing blade 611, a second step finishing blade 612, and a step portion 613. The first step finishing blade 611 is formed on a ridge of the groove 6 of the first grinding surface 601 and corresponds to the chamfer portion 31. The length in the axial direction of the first step finishing blade 611 is approximately the same as the length in the axial direction of the chamfer portion 31. The second step finishing blade 612 is formed on a ridge of the groove 6 of the second grinding surface 602 and corresponds to the complete thread portion 32. The step portion 613 is formed on a ridge of the groove 6 of the step 603 and corresponds to the boundary between the chamfer portion 31 and the complete thread portion 32.

As shown in Fig. 9, the height of the first step finishing blade 611 is set to a position lower than the height of a tip end portion 615 of the complete thread portion 32. The tip end portion 615 of the second step finishing blade 612 is arranged corresponding to a portion on the chamfer portion 31 side from a crest 711 of a thread 71A of the tip-most end of the complete thread portion 32. The height of the tip end portion 615 of the second step finishing blade 612 is set to a position corresponding to the inside diameter of the female thread 40 to be roll formed (refer to the height position Q in Fig. 9). The step portion 613 connects, in the radial direction, a rear end of the first step finishing blade 611 to the tip end portion 615 of the second step finishing blade 612. The second step finishing blade 612 becomes gradually lower from the step portion 613 toward the rear end side of the male thread portion 3 due to the back taper.

The rolling method of the female thread 40 by the thread forming tap 1 will be described with reference to Fig. 8 to Fig. 10. As shown in Fig. 8, the pilot hole 90 is formed in advance in the workpiece W. The thread forming tap 1 is mounted to the main spindle (not shown in the drawings) of the machine tool. The machine tool positions the thread forming tap 1 in a ready position just in front of the pilot hole 90 by moving the main spindle. The machine tool starts forward rotation of the thread forming tap 1 in unison with the main spindle. The machine tool then inserts the thread forming tap 1 into the pilot hole 90 from the ready position. As shown in Fig. 9, the chamfer portion 31 of the thread forming tap 1 screws and bites into the surface layer of the pilot hole 90 of the workpiece W. The surface layer starts to plastic deform, and after the chamfer portion 31, the complete thread portion 32 advances further into the surface layer of the pilot hole 90. Plastic deformation progresses and the female thread 40 is formed on the surface layer. Excess material 34 is pushed out from the crest of the female thread 40 in the inner circumferential direction. Then, the excess material 34 is cut and removed by the inside diameter finishing blade 61 as it passes by. Therefore, the thread forming tap 1 can roll-form the female thread 40 with a high inner diameter precision in the workpiece W. After rolling of the female thread 40 is complete, the machine tool stops rotating the thread forming tap 1.

Next, the machine tool starts to rotate the thread forming tap 1 in reverse in unison with the main spindle in order to remove the thread forming tap 1 from the female thread 40. The thread forming tap 1 moves to the ready position while rotating in reverse. The inside diameter finishing blade 61 has a back taper. The first step finishing blade 611 of the inside diameter finishing blade 61 is positioned lower than the tip end portion 615 of the second step finishing blade 612. Therefore, during the process in which the thread forming tap 1 is rotated in reverse and returned to the ready position, the first grinding surface 601 corresponding to the first step finishing blade 611 will not interfere with the inside diameter portion 41 of the female thread 40. The first grinding surface 601 is a portion in the opposite direction to the rake face of the first step finishing blade 611. The rake face of the first step finishing blade 611 is the inner wall surface of the groove 6. The machine tool stops the main spindle at the ready position and stops the reverse rotation of the thread forming tap 1 (refer to Fig. 10). When the thread forming tap 1 is rotated in reverse and removed from the female thread 40 formed in the workpiece W, the inside diameter finishing blade 61 will not interfere with the inside diameter portion 41 of the female thread 40 from the opposite direction to the rake face. Therefore, the thread forming tap 1 can reduce the deformation of the inside diameter portion 41.

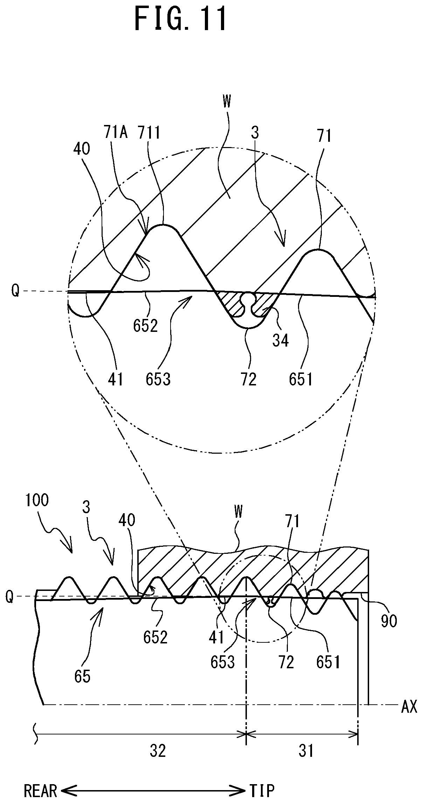

A modified example of the thread forming tap 1 will now be described with reference to Fig. 11. The inside diameter finishing blade 61 of the thread forming tap 1 is a two-step cutting blade, with a portion corresponding to the boundary between the chamfer portion 31 and the complete thread portion 32 having a stepped shape. If the height of the inside diameter finishing blade at the portion corresponding to the chamfer portion 31 is lower than the height of the inside diameter finishing blade formed on a portion corresponding to the thread of the tip-most end of the complete thread portion 32, the inside diameter finishing blade is not limited to having a stepped shape.

For example, a thread forming tap 100 shown in Fig. 11 is a modified example of the thread forming tap 1. The thread forming tap 100 is provided with an inside diameter finishing blade 65 instead of the inside diameter finishing blade 61. The inside diameter finishing blade 65 has a substantially inverted V-shape with the boundary portion between the chamfer portion 31 and the complete thread portion 32 being the apex. The grinding surface forming the inside diameter finishing blade 65 is formed into a cross-section having a substantially inverted V-shape corresponding to the shape of the inside diameter finishing blade 65.

The inside diameter finishing blade 65 is provided with first step finishing blade 651, a second step finishing blade 652, and a crest portion 653. The first step finishing blade 651 corresponds to the chamfer portion 31. The second step finishing blade 652 corresponds to the complete thread portion 32. The crest portion 653 corresponds to the boundary portion between the chamfer portion 31 and the complete thread portion 32. The height position of the crest portion 653 is set at a position corresponding to the inside diameter portion 41 of the female thread 40 to be roll formed. The position corresponding to the inside diameter portion 41 of the female thread 40 to be roll formed is the height position Q in Fig. 11. The first step finishing blade 651 is inclined so as to become lower from the crest portion 653 toward the tip end side of the male thread portion 3. The second step finishing blade 652 has a back taper similar to the inside diameter finishing blade 61. Therefore, the second step finishing blade 652 is inclined so as to become lower from the crest portion 653 toward the rear end side of the male thread portion 3. The first step finishing blade 651 may also have a similar back taper.

With this type of inside diameter finishing blade 65 as well, the first step finishing blade 651 corresponding to the chamfer portion 31 is positioned lower than the tip end portion of the second step finishing blade 652, i.e., the crest portion 653, similar to the inside diameter finishing blade 61 of the present embodiment. Therefore, even if the thread forming tap 100 is rotated in reverse and removed from the female thread 40, the grinding surface (not shown in the drawings) corresponding to the first step finishing blade 651 will not interfere with the inside diameter portion 41 of the female thread 40. Therefore, similar to the thread forming tap 1, when the thread forming tap 100 is rotated in reverse and removed from the female thread 40 formed in the workpiece W, the inside diameter finishing blade 65 will not interfere with the inside diameter portion 41 of the female thread 40 from the opposite direction to the rake face. Therefore, the thread forming tap 100 can also reduce deformation of the inside diameter portion 41.

Next, a verification test was conducted in order to verify the effects of a product of the present invention. In the verification test, roll-forming of a female thread was performed using the product of the present invention in a pilot hole formed in advance in a workpiece, and the quality of the female thread after roll-forming was compared with that of a known product. For the verification test, the thread forming tap 100 shown in Fig. 11 was used as an example of the product of the present invention. The known thread forming tap only has a back taper on a straight inside diameter finishing blade 161.

The processing environment is as follows.
- Workpiece: ADC 12 (10 mm plate thickness)
- Screw size: M14 x 1
- Machine tool: Vertical machining center
- Cutting oil: Water-soluble cutting fluid (emulsion, dilution factor of 10 times, internal lubrication 3 MPa)
- Tool holder: Milling chuck
- Pilot hole: ϕ 13. 4 mm (drill), actual measurement = 13. 395 mm
- Effective thread length: 10 mm (GO)
- Cutting speed: 44 m/min (1000 min-1)

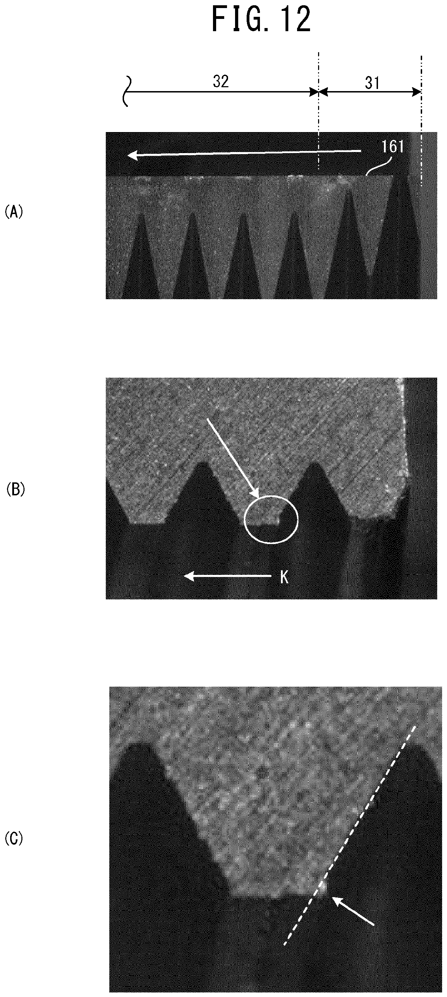

The test results of the known product will now be described. Fig. 12(A) is a photograph of a portion of the tip end side of the known product. The inside diameter finishing blade 161 has a back taper (refer to the direction of the arrow in Fig. 12(A)). The back taper is formed such that the height decreases from the chamfer portion 31 side toward the complete thread portion 32 side. Fig. 12(B) is an enlarged photograph of the female thread roll formed with the known product. The thread forming tap is removed from the roll formed female thread in the direction of arrow K shown in Fig. 12(B). The portion circled in Fig. 12(B) is a portion that comes into contact with the rake face of the inside diameter finishing blade 161 from the opposite side thereof when the thread forming tap rotates in reverse. Fig. 12(C) is a photograph showing the circled portion in Fig. 12(B) enlarged. As shown by the arrow in Fig. 12(C), it can be seen that the crest portion of the female thread is crushed.

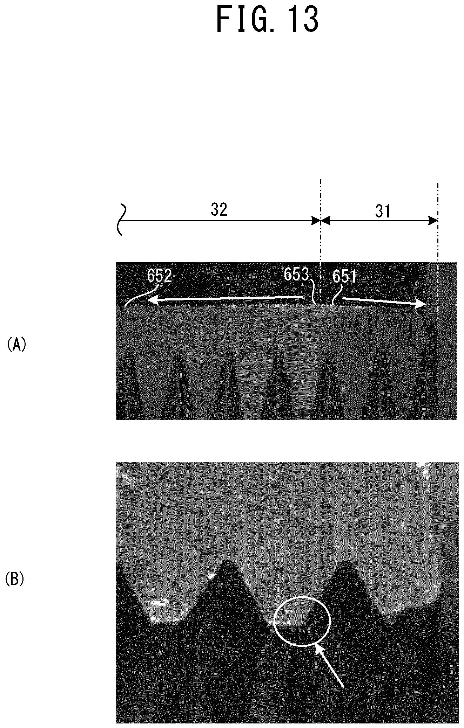

The results of the product of the present invention will now be described. Fig. 13(A) is a photograph showing a portion of the tip end side of the product of the present invention. The first step finishing blade 651 of the inside diameter finishing blade 65 is inclined downward from the crest portion 653 toward the tip end side. The second step finishing blade 652 is inclined downward from the crest portion 653 toward the rear end side. Fig. 13(B) is an enlarged photograph of a female thread roll formed with the product of the present invention. As is understood by comparing the product of the present invention with the known product, the circled portion in Fig. 13(B) is not crushed. The reason for this is that when the thread forming tap 100 is rotated in reverse, the portion opposite the rake face of the first step finishing blade 651 did not interfere with the inner diameter portion of the roll formed female thread. As a result of this, it was verified that the product of the present invention was able to reduce deformation of the formed female thread when the thread forming tap 100 is removed from the female thread after roll forming.

As described above, the thread forming tap 1 according to the present embodiment is a tool for forming a female thread by plastic deforming the pilot hole 90 of the workpiece W. The thread forming tap 1 is provided with the male thread portion 3, the groove 6, and the inside diameter finishing blade 61. The male thread portion 3 is provided with the complete thread portion 32 and the chamfer portion 31. The chamfer portion 31 is provided continuous with the complete thread portion 32. The chamfer portion 31 decreases in diameter toward the tip end. The groove 6 is provided parallel to the shaft center spanning the complete thread portion 32 and the chamfer portion 31. The groove 6 divides the thread 71 of the male thread portion 3.

On the chamfer portion 31 and the complete thread portion 32, the inside diameter finishing blade 61 is provided along the open edge of the groove 6 on the side opposite the rotational direction T of the thread forming tap 1. The inside diameter finishing blade 61 cuts and removes the crest portion of the female thread formed on the surface layer of the pilot hole 90. When the distance from the shaft center AX of the thread forming tap 1 is the height, the height of the first step finishing blade 611 of the inside diameter finishing blade 61 on the chamfer portion 31 is lower than the height of the second step finishing blade 612 of the inside diameter finishing blade 61 formed on the portion corresponding to the thread 71 of the tip-most end of the complete thread portion 32. Thus, when the thread forming tap 1 is rotated in reverse and removed from the workpiece W, the inside diameter finishing blade 61 on the chamfer portion 31 will not interfere with the formed female thread. Thus, the thread forming tap 1 can reduce deformation of the female thread formed in the pilot hole 90.

The step portion 613 is provided on the inside diameter finishing blade 61 between the chamfer portion 31 and the thread 71 of the tip-most end of the complete thread portion 32. At the step portion 613, the height of the chamfer portion 31 side becomes lower than the height of the complete thread portion 32. Thus, with the thread forming tap 1, the height of the inside diameter finishing blade 61 on the chamfer portion 31 can be lower than the height of the inside diameter finishing blade 61 formed on the thread 71 of the tip-most end of the complete thread portion 32.

The inside diameter finishing blade 61 is provided with at least a back taper. The back taper is formed such that the height decreases from the portion corresponding to the thread 71 of the tip-most end of the complete thread portion 32 toward the rear end side. Thus, the thread forming tap 1 can reduce friction with the workpiece when rotating forward and in reverse. Thus, the thread forming tap 1 can reduce heat generation caused by the inside diameter finishing blade 61 contacting the workpiece.

Note that the present invention is not limited to the above-described embodiments, and can be modified in various ways. The material of the shank 2 of the thread forming tap 1 may be a material other than high-speed tool steel, for example, cemented carbide. The back taper is provided on every portion of the inside diameter finishing blade 61, but the back taper may alternatively be provided only on the second step finishing blade 612. Also, the inside diameter finishing blade 61 need not have the back taper. The number of oil grooves 4 is not limited to four, and may be less than or more than four. The oil grooves 4 and the oil passage 7 may be omitted. The thread forming tap 1 is a left turning tool that rotates counterclockwise when viewed from the tip end side, but the thread forming tap 1 may alternatively be a right turning tool that rotates clockwise.

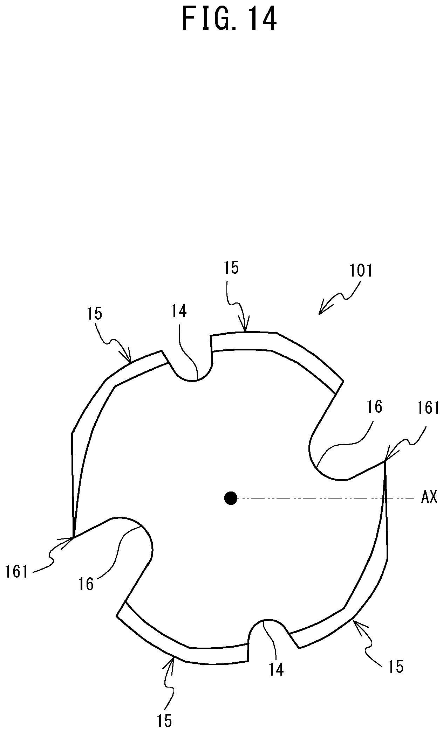

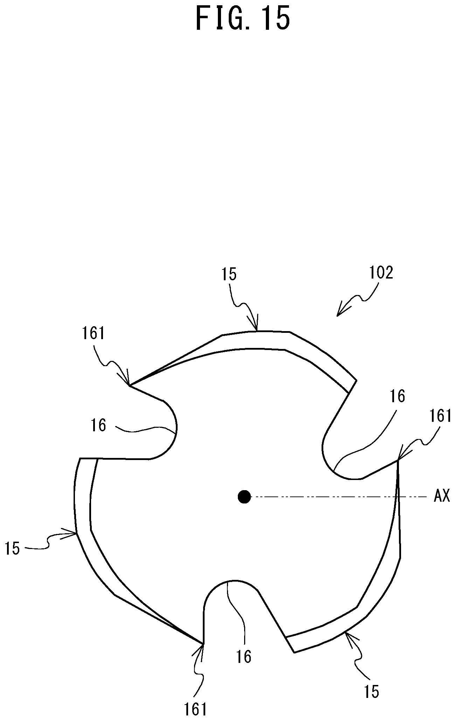

There is one inside diameter finishing blade 61 of the thread forming tap 1 but there may be two or more. For example, a thread forming tap 101 shown in Fig. 14 is provided with four protrusions 15, two oil grooves 14, two grooves 16, and two of the inside diameter finishing blades 161 on the male thread portion, and have a shape that is point symmetrical about the shaft center AX. A thread forming tap 102 shown in Fig. 15 is provided with three of the protrusions 15, three of the grooves 16, and three of the inside diameter finishing blades 161. Even with these modified structures, the same effects as those of the above-described embodiments can be obtained.

As shown in Fig. 8, in the axial direction, the step portion 613 is positioned closer to the chamfer portion 31 side than the boundary between the chamfer portion 31 and the complete thread portion 32, but it may also be at the same position as the boundary between the chamfer portion 31 and the complete thread portion 32.

## Claims

1. A thread forming tap for forming a female thread by plastic deforming a pilot hole in a workpiece, comprising:
a male thread portion having a complete thread portion, and a chamfer portion that is provided continuous with the complete thread portion and decreases in diameter toward a tip end;
a groove provided parallel to a shaft center and spanning the complete thread portion and the chamfer portion so as to divide a thread of the male thread portion; and
an inside diameter finishing blade which is provided on the chamfer portion and the complete thread portion, along an open edge of the groove on a side opposite a rotational direction of the thread forming tap, and which cuts and removes a crest portion of the female thread, wherein
when a distance from an axis of the thread forming tap is the height of the inside diameter finishing blade, the height on the chamfer portion side of the inside diameter finishing blade is lower than the height of a portion corresponding to the thread on a tip-most end of the complete thread portion.

2. The thread forming tap according to claim 1, wherein
on the inside diameter finishing blade, a step portion where the height on the chamfer portion side is lower than the height on the complete thread portion side is provided between the chamfer portion and the thread on the tip-most end of the complete thread portion.

3. The thread forming tap according to claim 1, wherein
an inclined portion where the height decreases from the thread on the tip-most end of the complete thread portion toward the tip end side of the chamfer portion is provided on the inside diameter finishing blade.

4. The thread forming tap according to claim 1, wherein at least a back taper where the height decreases from a portion corresponding to the thread on the tip-most end of the complete thread portion toward a rear end side is provided on the inside diameter finishing blade.
